# EUROPEAN PATENT APPLICATION

(11) **EP 4 275 897 A1**
(43) Date of publication of application: **15.11.2023**
(21) Application number: 22290029.2
(22) Date of filing: 09.05.2022
(51) Int. Cl.: B33Y 10/00, B33Y 70/00, C04B 28/02

(54) **METHOD OF PLACING A FLOWABLE CONSTRUCTION MATERIAL**

(71) Applicant: Holcim Technology Ltd, 6300 Zug (CH)
(72) Inventor: Duchand, Sylvain, F-38070 Saint-Quentin-Fallavier (FR); Reboussin, Sandrine, F-38070 Saint-Quentin-Fallavier (FR); Zhang, Qing, F-38070 Saint-Quentin-Fallavier (FR)
(74) Representative: Keschmann, Marc

(57) **Abstract**

A method of placing a flowable construction material comprising a hydraulic cement for building structural components layer-by-layer, such as for 3D concrete printing, said method comprising:
conveying the flowable construction material to a deposition head,
placing the construction material through an outlet of the deposition head in order to form a layer of construction material,
before placing the construction material, adding a thickening agent to the construction material so that the placed material has an increased yield stress before setting occurs when compared to the material during the conveying step,
wherein successive layers of construction materials are placed on top of each other,
wherein the thickening agent is added in the form of a colloidal dispersion of mineral particles dispersed in a liquid, the colloidal dispersion preferably having a pH value of ≥ 7.

## Description

The invention refers to a method of placing a flowable construction material comprising a hydraulic cement for building structural and architectural components layer-by-layer, such as for 3D concrete or mortar printing.

3D printing is a building technique that is commonly called "additive manufacturing" and consists of joining material to produce objects, layer upon layer, from 3D model data or other electronic data source. In particular, successive layers of material are formed under computer control by means of an industrial robot. It has already been proposed to develop 3D printers capable of producing structural buildings from a construction material that can be a mortar or a concrete. According to these proposals, the construction material is extruded through a nozzle to build structural components layer-by-layer without the use of formwork or any subsequent vibration. The possibility to build structures without formwork is a major advantage in terms of production rate, architectural freedom and cost reduction.

Usually, 3D printing of construction materials is a continuous process that comprises conveying fresh concrete, mortar or micro-mortar to a deposition head and placing the construction material through an outlet of the deposition head in order to form a layer of concrete. While placing the concrete, the mortar or the micro-mortar, the deposition head is moved under computer control in order to create a layer of construction material in accordance with the underlying 3D model. In particular, the deposition head places a ribbon of fresh concrete or mortar material. For allowing the fresh concrete or mortar to be moved smoothly through each part of the delivery process to the deposition head, a consistent rheology of the fresh material must be safeguarded.

However, the construction material must not only be sufficiently fluid for conveying and extrusion purposes, but also sufficiently firm in order to provide the required mechanical stability of the 3D printed structure before the hydraulic binder sets. In particular, the lower layers of the construction material should sustain the load imposed by upper layers without collapsing or deforming.

Therefore, a flowable construction material adapted for 3D printing typically contains a considerable amount of a hydraulic binder that has a short initial setting time, such as an aluminate cement. However, a binder having a short initial setting time will increase the risk that material builds up in the mixing devices, pumps, and in the printing head.

Another aspect to be considered is the printing speed. A high printing speed is needed for reducing construction time and to ensure an adequate interlayer adhesion. This is in some cases achieved by using a hydraulic binder that has a short initial setting time, as the deposed material will harden quickly and be able to support the layers that are subsequently deposited.

3d printed elements also require a strong bonding strength between the deposited layers, to ensure an adequate overall strength of the 3d printed structure. For this purpose, it is beneficial to place a layer while the preceding layer is still fresh. However, with a hydraulic binder having a short initial setting time the operational flexibility is very limited.

From the point of view of operational flexibility, it would be desirable to have a flowable construction material that has a long initial setting time, i.e. a constant consistency that does not increase too much with time, because this would allow to have more time for adjustments of the printing process, such as for changing printing parameters during the construction.

To accommodate some of the above requirements, it has been proposed to add various admixtures to the flowable construction material in the deposition head immediately before the material is placed through an outlet of the deposition head. This allows to separately optimize the material characteristics for the process of pumping the material to the deposition head and for the process of placing the material layer by layer. In particular, the construction material can be designed to have a low plastic viscosity and a low yield stress for a good pumpability, and is adjusted to obtain the material properties that are desired for the placing process by adding a suitable admixture in the deposition head.

For example, WO 2017/221058 A1 discloses adding a rheology modifying agent to the flowable construction material in the deposition head so as to increase the yield stress. Starch ether, celluloses ether, water soluble polyacrylamide, casein, and/or welan gum have been suggested to be used as the rheology modifying agent.

However, rheology modifying agents used in the prior art have the drawback to cause an acidic environment when added to cement, which, in some cases, has the potential to generate the release of hazardous substances. This is in particular the case, when the cement comprises sulfur containing minerals, such as ground granulated blast furnace slag or concrete demolition waste, where the acidic admixtures cause the formation of H₂S gas. This has limited the choice of hydraulic binders to cement types that only contain little or no sulfur.

Therefore, the instant invention aims at improving a printable hydraulic construction material so as to overcome the above-mentioned problems. In particular, the invention aims at broadening the range of cements that can be used as a construction material in 3D printing applications, to which a rheology modifying agent is added in the printing head.

In order to overcome these shortcomings, the invention according to a first aspect thereof provides a method of placing a flowable construction material comprising a hydraulic cement for building structural components layer-by-layer, such as for 3D concrete printing, said method comprising:
conveying the flowable construction material to a deposition head,
placing the construction material through an outlet of the deposition head in order to form a layer of construction material,
before placing the construction material, adding a thickening agent to the construction material so that the placed material has an increased yield stress before setting occurs when compared to the material during the conveying step,
wherein successive layers of construction materials are placed on top of each other,
wherein the thickening agent is added in the form of a colloidal dispersion of mineral particles dispersed in a liquid, the colloidal dispersion preferably having a pH value of ≥ 7.

Thus, the invention is based on the idea to use specific inorganic thickening agents in the form of a colloidal dispersion that do not form an acidic environment and therefore prevent the release of hazardous substances, such as H₂S, when in contact with the construction material. In this way, a wide range of hydraulic cements may be used for 3D printing, including composite cements that contain sulfur. By adding a colloidal dispersion to the construction material, the yield strength of the construction material that is extruded through the nozzle of the deposition head is increased so that each layer of construction material is able to sustain its own weight and the weight of subsequent layers placed on top of each other without collapsing.

Adding the thickening agent in the form of a colloidal dispersion considerably prevents aggregation of the solid mineral particles and enhances their dispersibility into the construction material.

Preferably, water is used as a dispersion medium of the colloidal dispersion.

The mineral particles preferably have a particle size distribution characterized by a D10 of ≥ 2 nm, preferably ≥ 5 nm, and a D90 of ≤ 200 nm, preferably ≤ 100 nm. D10 refers to the 10^{th} percentile of the particle size distribution by volume of the particle size, i.e. 10% of the volume is formed by particles having a size that is below the D10 diameter. Analogously, D90 refers to the 90^{th} percentile of the particle size distribution by volume of the particle size, i.e. 90% of the volume is formed by particles having a size that is below the D90 diameter.

Preferably, the mineral particles have a specific surface area of 100-500 m²/g. The specific surface area refers to the BET specific surface area that is measured according to the standard ISO 9277:2010.

The addition of a thickening agent according to the invention results in that the increased yield stress property is attained almost instantly after placement, that is to say before the setting has occurred. Therefore, the increase in yield stress that is achieved by the invention is independent from the setting process of the hydraulic binder of the construction material. Thus, the invention generally does without controlling or accelerating the setting process.

As used herein, a thickening agent is understood to refer to a viscosity modifying admixture as defined in European Standard EN-934-2 of August 2012, which is an admixture that limits segregation in fresh concrete or mortar, i.e. the separation of the concrete constituents as a function of their respective densities and weight, by improving cohesion.

The expression "before setting occurs" is understood to refer to the initial setting time as defined in standard EN 196-3. According to the needle penetration test method disclosed in said standard, the beginning of the setting process ("initial setting") is identified, when the concrete paste - due to its stiffness - exerts a predefined resistance to a test needle that is penetrating into the paste. In particular, the initial setting time is the time period between the time water is added to the cement and the time at which a 1 mm square section needle fails to penetrate the cement paste, placed in the Vicat's mold 5 mm to 7 mm from the bottom of the mold.

Due to the yield strength increasing effect brought about by the thickening agent, the presence or the addition of a setting accelerator is preferably excluded. A setting accelerator is understood to be an admixture that is added in order to reduce the initial setting time as defined in the European Standard EN-934-2 of August 2012.

The construction material may be a cement mortar or a cement micro-mortar, i.e. a mixture of a hydraulic cement, potentially additional mineral components such as ground limestone, water, sand, and chemical admixtures.

The construction material may also be a concrete, i.e. a mixture of a hydraulic cement, potentially additional mineral components such as ground limestone, water, sand, gravel, and chemical admixtures.

In a preferred embodiment, the construction material is a flowable ultrahigh performance concrete, i.e. a mixture of cement, fine limestone material, micro-sand and/or sand, a high-range water reducing admixture, potentially an accelerating admixture, and water, that develops a compressive strength at 28 days of at least 100 MPa.

The thickening agent may be added to the construction material just before reaching the deposition head or in the deposition head.

Preferably, the thickening agent and the construction material are mixed with each other before placing the construction material, wherein a static mixer is preferably used for mixing.

Preferably, the thickening agent is continuously added to the flow of conveyed construction material so that a continuous process is achieved. Preferably, not only the addition of the thickening agent, but also the mixing of the thickening agent with the flow of conveyed construction material is carried out continuously, so that a continuous deposition of the mix of construction material and thickening agent may be achieved while moving the deposition head in accordance with the underlying 3D data.

The amount of thickening agent that is continuously added to the flow of construction material per time unit is preferably controlled in order to adjust a defined ratio of thickening agent and construction material in the final mixture that is placed layer by layer. In particular, the flow rate of the construction material that is conveyed to the deposition head is measured and the flow rate of the thickening agent added to the flow of construction material is adjusted to achieve the defined ratio. Alternatively, a fixed flow rate of the construction material conveyed to the deposition head is adjusted and the flow rate of the thickening agent added to the flow of construction material is selected so as to achieve the defined ratio.

Preferably, the step of placing the construction material comprises extruding the construction material in a pasty form through a nozzle of the deposition head.

As to the colloidal dispersion, a preferred embodiment provides that the colloidal dispersion has a solid content of 20-55 wt.-%. The solid content is measured by drying the colloidal dispersion at 105°C for 24 hours, and measuring and calculating the weight loss prior and after the drying stage. The solid content of the colloidal dispersion comprises or consists of the mineral particles mentioned above. Preferably, the solid content of the colloidal dispersion does not contain any components other than the mineral particles that bring about the thickening effect upon addition to the flowable construction material.

As to the nature of the mineral particles, a preferred embodiment provides that the thickening agent comprises at least one member selected from the group consisting of a pozzolanic material and a phyllosilicate. The pozzolanic material is a siliceous and aluminous material and preferably consists of or comprises amorphous silica or fumed aluminum oxide. A colloidal dispersion of silica is for example commercialized by Sigma-Aldrich under the LUDOX^{®} range of products. The phyllosilicate may be a clay, such as a natural clay, including sepiolite, attapulgite, bentonite, montmorillonite, hectorite, saponite, smectite, kaolinite and wollastonite, or a synthetic clay, such as Laponite^{®} supplied by Byk Additives Limited.

The amount of the colloidal dispersion added to the flowable construction material depends i.a. on the type of mineral particles, the desired yield strength development and the solid content of the dispersion. In particular, the higher the solid content of the colloidal dispersion is, the less mass of thickening agent needs to be added to the construction material.

According to a preferred embodiment, the thickening agent is amorphous silica and/or fumed aluminum oxide and is added to the construction material in an amount of 8-18 g/l, preferably 10-12 g/l, defined as weight of the solid content of the thickening agent per volume of the construction material.

According to a preferred embodiment, the thickening agent is a phyllosilicate clay and is added to the construction material in an amount of 2-5 g/l, defined as weight of the solid content of the thickening agent per volume of the construction material.

The amount of thickening agent added to the construction material is preferably selected such that a layer of placed material has a sufficient stability in order not to collapse under its own weight or the weight of subsequent layer(s) placed on top. In this connection, a preferred mode of operation consists in that, after the placement of a first layer of construction material, at least one subsequent layer of construction material is placed onto the first layer, wherein the amount of thickening agent added to the construction material is selected so as to increase the yield stress so that the first layer does not collapse under the load of said at least one subsequent layer.

In this connection, "not collapsing" means that the height of the layer is not reduced by more than 10%, preferably more than 5%, under the load of the at least one subsequent layer.

Since the inventive method aims at enabling a fast construction progress, the above stability criteria should preferably be fulfilled at a minimum construction speed as defined by a maximum time gap between the placement of two subsequent layers of material. According to a preferred mode of operation, construction material of the first layer is allowed to rest during a time period of not more than 2 minutes, preferably during a time period of 30-60 sec, before construction material of a subsequent layer is placed onto the said construction material of the first layer.

According to a preferred embodiment of the invention, the yield stress of the freshly placed construction material is 500 - 2000 Pa, preferably 400 - 1000 Pa, measured 30-60 sec. after its placement. Therefore, it is preferably proceeded such that the amount of thickening agent added to the construction material is selected so as to increase the yield stress to 500 - 2000 Pa, preferably 400 - 1000 Pa. The yield stress is measured with a scissometer. A scissometer consists of a vane plunged into the material to be tested and to which an increasing torque is applied. When a failure occurs in the material, the vane starts to rotate, generally as the torque reaches its maximum value, which is considered as the characteristic value that is representative of the yield stress of the material. The yield stress measurement is preferably carried out within 30-60 sec after the material has been placed.

The conveying step of the inventive method comprises conveying the construction material in a flowable state to the deposition head. In particular, the conveying of the construction material is performed by pumping. Preferably, the material is conveyed in a wet state and is ready to be placed without the need of adding any additional components with the exception of the thickening agent.

Preferably the fresh construction material, such as fresh concrete or fresh mortar, is stored in a silo or any other storage container or in a mixer of a ready-mix delivery truck and is conveyed from the storage site directly to the deposition head.

Preferably, the construction material during the conveying step, i.e. before the addition of the thickening agent, is designed to be self-levelling. In particular, the yield stress of the material to be conveyed is between 200 to 400 Pa when measured with a scissometer.

In order to achieve the conveyability or pumpability described above, a water reducer, in particular a plasticizer or a super-plasticizer, preferably a plasticizer based on polyoxy polycarboxylate or phosphonates, is preferably added to the construction material before the conveying step. Preferably, the flowable construction material contains both, a phosphonate-based super-plasticizer and a polycarboxylate-based super-plasticizer.

A water reducer makes it possible to reduce the amount of mixing water for a given workability by typically 10-15%. By way of example of water reducers, mention may be made of lignosulphonates, hydroxycarboxylic acids, carbohydrates, and other specific organic compounds, for example glycerol, polyvinyl alcohol, sodium alumino-methyl-siliconate and sulfanilic acid as described in the Concrete Admixtures Handbook, Properties Science and Technology, V.S. Ramachandran, Noyes Publications, 1984.

Super-plasticisers belong to a new class of water reducers and are capable of reducing water contents of mixing water, for a given workability, by approximately 30% by mass. By way of example of a super-plasticiser, the PCP super-plasticisers may be noted. The term "PCP" or "polyoxy polycarboxylate" is to be understood according to the present invention as a copolymer of acrylic acids or methacrylic acids and their esters of polyoxy ethylene (POE).

Good results have been achieved with the following types of superplasticizers: Viscocrete 510-P by Sika (based on polycarboxylate), Optima 100 by Chryso (based on modified phosphonates) and Viscocrete Tempo 533 by Sika (based on polycarboxylate).

Preferably, the construction material comprises 4-15 kg, more preferably 8-12 kg of a water reducer, a plasticiser or a super-plasticiser, per m³ of flowable construction material. If more than one type of water reducer, plasticiser or super-plasticiser is used, the amount of 5-15 kg, preferably 8-12 kg, refers to the total amount of all such constituents per m³ of flowable construction material.

The flowable construction material contains a hydraulic cement, which is a hydraulic binder comprising at least 50 wt.-% of CaO and SiO₂ that sets due to a chemical hydration reaction between the dry ingredients and water. The hydraulic cement may contain other components in addition to CaO and SiO₂. Various mineral additions, such as, e.g., silica fume, granulated blast-furnace slag (gbfs), fly ash, natural pozzolans, calcined clays, ground limestone or concrete demolition waste, may be added to Portland cement, in order to obtain Portland composite cements. The mineral additions, typically between 10 and 50 wt.-% of the total weight of the hydraulic cement, are in most applications ground granulated blast furnace slag, fly ash, pozzolans, ground limestone or mixtures thereof. The addition of silica fume can be of particular benefit for the production of high strength 3d printed mortar or concrete, i.e. having a compressive strength at 28 days of at least 70 MPa.

Preferably, the hydraulic cement is composed of Portland cement mixed with any mineral addition described in the cement standard EN197-1 of April 2012.

Preferably, the hydraulic cement comprises at least 30 wt.-% Portland clinker.

Preferably, the hydraulic cement comprises at least 10 wt.-% of a supplementary cementing material, preferably selected from ground granulated blast-furnace slag and concrete demolition waste. When the hydraulic cement comprises at least 10 wt.-% of blast furnace slag, using acidic admixtures and thickening agents that have a pH of·less than 7 results in the formation of hazardous substances, such as H₂S gas formed from the dissolution of sulfur containing minerals in the binder, such as slag and concrete demolition waste. The thickening agent added to the construction material preferably has a pH of at least 7, which prevents the formation of hazardous substances when the two components are mixed together.

Suitable cements are the cements described in the European NF EN 197-1 Standard of April 2012 or mixtures thereof, preferably cement of the types CEM I, CEM II, CEM III, CEM IV or CEM V.

The hydraulic cement may also be a fine or an ultrafine cement, i.e. a hydraulic cement that is ground to a higher fineness than standard hydraulic cements. The fineness can for example be higher that 5000 cm²/g and reach values up to 13000 cm²/g or even 15000 cm²/g (expressed as cement Blaine fineness).

According to a preferred embodiment, the flowable construction material does not contain any aluminate cement, such as calcium aluminate cement. Alternatively, aluminate cement such as calcium aluminate cement or a calcium sulfoaluminate cement, may be present in an amount of < 5 % by weight, preferably < 2.0 % by weight, based on the total amount of hydraulic cement.

According to a preferred embodiment, the hydraulic cement comprises Portland cement and an aluminate cement, wherein the aluminate cement is present in an amount of < 5 % by weight, preferably in an amount of < 2 % by weight, based on the total amount of hydraulic cement.

Calcium aluminate cements are cements consisting predominantly of hydraulic calcium aluminates. Alternative names are "aluminous cement", "high-alumina cement" and "Ciment fondu" in French. Calcium aluminate cements have a short initial setting time, so that they are considered less preferred. A hydraulic cement having a short initial setting time will increase the risk that material builds up in the deposition head. Further, a short initial setting time may reduce the bonding strength between the layers placed on above the other, because the preceding layer may not be fresh any more when a subsequent layer is placed. Limiting the content of calcium aluminate cement is also preferred in terms of costs, since calcium aluminate cement is relatively expensive.

Further, the flowable construction material may contain a mineral filler, such as limestone. The addition of a fine fraction of a mineral filler can be of particular benefit for the production of high strength 3d printed mortar or concrete. Preferably, the mineral filler, such as limestone, has a particle size of < 50 µm, preferably < 40 µm. More preferably, the mineral filler, such as limestone, comprises a fine fraction having a particle size distribution characterized by a D50 of 3-5 µm and a D90 of 8-12 µm and a coarse fraction having a particle size distribution characterized by a D50 of 10-12 µm and a D90 of 35-40 µm.

Further, the aggregates present in the flowable construction material may comprise a microsand having a particle size of < 1 mm), a second sand having a particle size of < 4 mm) and optionally aggregates ( > 4 mm and < 32 mm).

The flowable construction material may contain metal fibers and/or organic fibers and/or glass fibers. The quantity by volume of fibers is generally from 0.5 to 8% relative to the total volume of the fresh concrete composition. The quantity of metal fibers, expressed in terms of volume of the final hardened concrete is generally less than 3%, for example from 0.5 to 2.5%, preferably approximately 2%. The quantity of organic fibers, expressed on the same basis, is generally from 1 to 8%, preferably from 2 to 5%. The metal fibers are generally chosen from the group including steel fibers, such as high strength steel fibers, amorphous steel fibers or stainless steel fibers. The steel fibers may optionally be coated with a non-ferrous metal such as copper, zinc, nickel (or alloys thereof).

The individual length (1) of the metal fibers is generally at least 2 mm and is preferably 10 to 30 mm. The ratio l/d (d being the diameter of the fibers) is generally from 10 to 300, preferably from 30 to 300, preferably from 30 to 100.

The organic fibers comprise polyvinyl alcohol (PVA) fibers, polyacrylonitrile (PAN) fibers, fibers of polyethylene (PE), high-density polyethylene (HDPE) fibers, polypropylene (PP) fibers, fibers of homo- or copolymers, polyamide or polyimide fibers. Mixtures of these fibers may be used. The organic reinforcing fibers used in the invention may be classified as follows: high modulus reactive fibers, low modulus nonreactive fibers and low modulus reactive fibers. The presence of organic fibers makes it possible to modify the behavior of the concrete in relation to heat or fire.

The individual length of the organic fibers is preferably from 5 to 40 mm, preferably from 6 to 12 mm. The organic fibers are preferably PVA fibers.

The effective water/cement ratio (wt/wt ratio) of the construction material used in the invention is preferably from 0.4 to 0.6, more preferably from 0.48 to 0.57. The effective water/binder ratio may vary, for example due to the water demand of the mineral additions when these are used. The water/binder ratio is defined as being the ratio by mass of the quantity of water to the dry mass of the hydraulic cement (Portland cement and mineral additions).

According to a second aspect, the invention refers to a kit of components for building structural components layer-by-layer, such as for 3D concrete printing, in particular for performing a method according to the first aspect of the invention, comprising:
- a flowable construction material comprising a hydraulic cement, and
- a thickening agent for increasing the yield stress of the flowable construction material before setting occurs, the thickening agent being in the form of a colloidal dispersion of mineral particles dispersed in a liquid, the colloidal dispersion preferably having a pH value of ≥ 7.

The invention will now be explained with reference to the following examples.

In the examples, the following mortar compositions have been used.

| | **Type A** | | **Type B** |
|---|---|---|---|
| **Mortar #** | **#1** | **#2** | **#3** |
| **Raw materials** | **Kg/m**³ | **Kg/m**³ | **Kg/m**³ |
| Cement CEM I 52,5 R | 360 | 360 | 425 |
| Slag | 299 | 299 | - |
| Fine limestone filler (D50 4 microns, D90 10 microns) | 61 | 61 | 141,7 |
| Limestone filler (D50 11 microns, D90 38 microns) | - | - | 305,1 |
| Sand 0/1 (siliceous) Sibelco J-5060S | 138 | 138 | 1223 |
| Sand 0/1 (siliceous/limestone-rounded) La petite Craz | 864 | 665 | - |
| Aggregates 1/5 (siliceous/limestone-rounded) La petite Craz | 359 | 554 | - |
| Fibers Neuflex AC 6mm | 0,42 | 0,42 | 0,4 |
| Plasticizer Viscocrete 510-P | 0,82 | 0,82 | - |
| Plasticizer Optima 100 | 5,9 | 4,18 | 10,5-12,2 |
| Plasticizer Viscocrete Tempo 533 | 4,18 | 4,18 | - |
| W_{eff}/C | 0,55 | 0,55 | 0,50 |
| W_{eff}/dry mix | 0,094 | 0,095 | 0,102 |

Further, the following thickening agents were used:
Thickening agent #1:
   Name: Laponite SL-25
   Chemistry: Synthetic clay (layered silicate)
   Supplier: BYK
   Solid content: 25 wt.-%
   pH: 9.4
Thickening agent #2:
   Name: Ludox SM-30
   Chemistry: Amorphous nanoscale silica
   Supplier: Grace
   Solid content: 30 wt.-%
   Comment: Monomodal, very small particle size (<10 nanometers), sodium counterion, Specific surface: 320-400 m2/g
   pH: 9.7-10.3
Thickening agent #3:
   Name: Ludox HS-40
   Chemistry: Amorphous nanoscale silica
   Supplier: Grace
   Solid content: 40 wt.-%
   Comment: Monomodal, small particle size (approx 10 nanometers), sodium counterion, Specific surface: 220 m2/g pH: 9.2-9.9

Mortar compositions were prepared by performing the following steps:

| **Steps** | **Details** | **Duration** |
|---|---|---|
| Dry powder mixing | PV (140 ± 5rpm) | 1 min |
| Water introduction | PV (140 ± 5rpm) | < 30 seconds |
| Mixing | PV (140 ± 5rpm) | 2 minutes |
| Mixing | GV (285 ± 10rpm) | 3 minutes |
| Thickener addition | | < 10 seconds |
| Mixing | PV (140 ± 5rpm) | 30 seconds |

### Example 1:

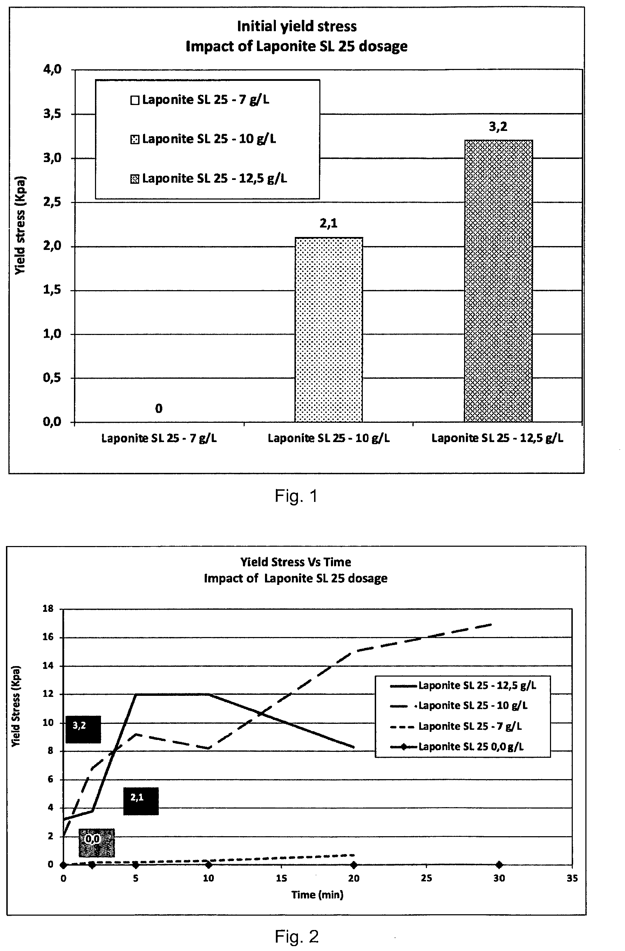

Mortar #1 was mixed with thickening agent #1 with different dosages of the thickening agent: 7 g/l, 10 g/l and 12.5 g/l. Fig. 1 shows the initial yield stress directly after placing a ribbon of the mixture. Fig. 2 shows the yield stress development over time.

The results indicate that a higher dosage rate of the thickening agent results in higher yield stress. A dosage rate of 7 g/l showed an insufficient yield stress. A dosage rate of 12.5 g/l resulted in an excessive initial yield stress. A dosage rate of 10g/l offered a good compromise.

### Example 2:

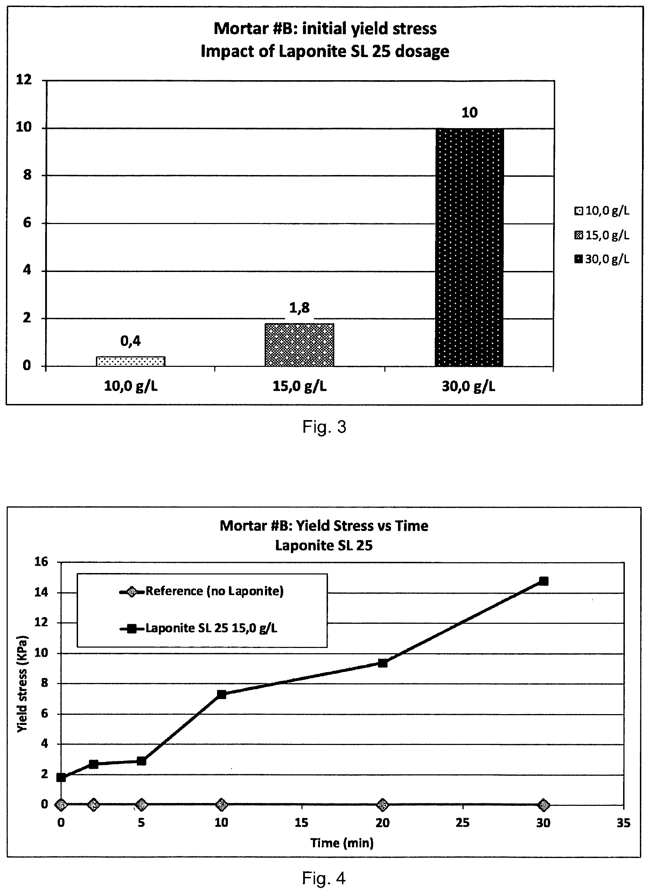

Mortar #3 was mixed with thickening agent #1 with different dosages of the thickening agent: 10 g/l, 15 g/l and 30 g/l. Fig. 3 shows the initial yield stress directly after placing a ribbon of the mixture. Fig. 4 shows the yield stress development over time.

Again, the results indicate that a higher dosage rate of the thickening agent results in higher yield stress. A dosage rate of 10 g/l showed an insufficient yield stress. A dosage rate of 30 g/l resulted in an excessive initial yield stress. A dosage rate of 15 g/l offered a good compromise.

### Example 3:

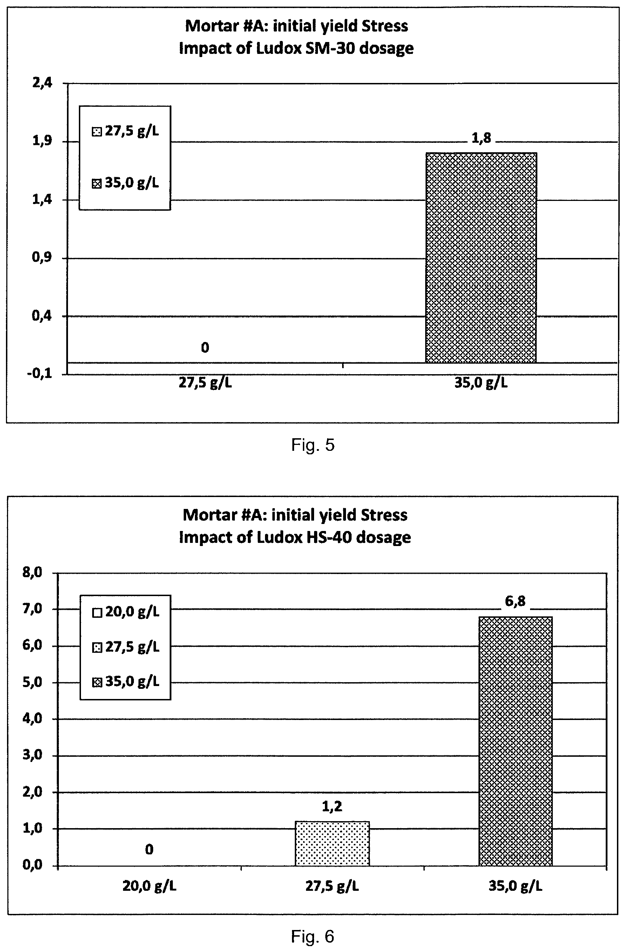

Mortar #2 was mixed with thickening agents #2 or #3 with different dosages of the thickening agent: 20 g/l, 27.5 g/l and 35 g/l for thickening agent #2 and 27.5 g/l and 35 g/l for thickening agent #3. Fig. 5 shows the initial yield stress directly after placing a ribbon of the mixture containing thickening agent #2 and Fig. 6 shows the initial yield stress directly after placing a ribbon of the mixture containing thickening agent #3. Fig. 7 shows the yield stress development over time.

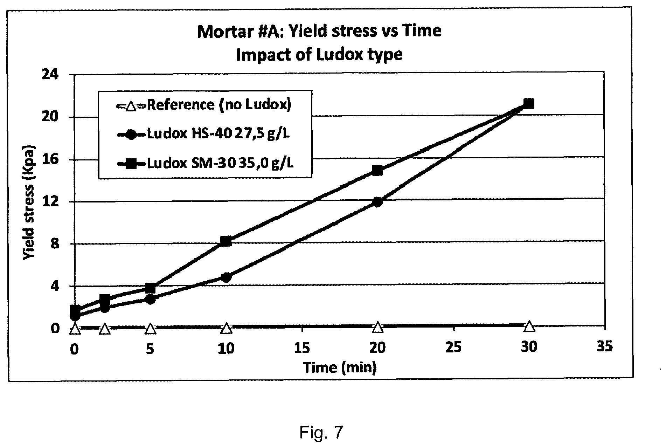

Appropriate initial yield stress is observed for a dosage rate of 27.5 g/l for thickening agent #2 and for a dosage rate of 35 g/l for thickening agent #3. Fig. 7 shows that an appropriate yield stress build-up rate was reached when using either one of these two thickening agents.

## Claims

1. A method of placing a flowable construction material comprising a hydraulic cement for building structural and architectural components layer-by-layer, such as for 3D concrete printing, said method comprising:
conveying the flowable construction material to a deposition head,
placing the construction material through an outlet of the deposition head in order to form a layer of construction material,
before placing the construction material, adding a thickening agent to the construction material so that the placed material has an increased yield stress before setting occurs when compared to the material during the conveying step,
wherein successive layers of construction materials are placed on top of each other,
wherein the thickening agent is added in the form of a colloidal dispersion of mineral particles dispersed in a liquid, the colloidal dispersion preferably having a pH value of ≥ 7.

2. Method according to claim 1, wherein water is used as a dispersion medium of the colloidal dispersion.

3. Method according to claim 1 or 2, wherein the mineral particles have a particle size distribution **characterized by** a D10 of ≥ 2 nm, preferably ≥ 5 nm, and a D90 of ≤ 200 nm, preferably ≥ 100 nm.

4. Method according to claim 1, 2 or 3, wherein the mineral particles have a BET specific surface area of 100-500 m²/g, measured according to the standard ISO 9277:2010.

5. Method according to any one of claims 1 to 4, wherein the colloidal dispersion has a solid content of 20-55 wt.-%.

6. Method according to any one of claims 1 to 5, wherein the thickening agent comprises at least one member selected from the group consisting of a pozzolanic material and a phyllosilicate.

7. Method according to any one of claims 1 to 6, wherein the thickening agent comprises at least one member selected from the group consisting of amorphous silica, fumed aluminum oxide and phyllosilicate clay.

8. Method according to any one of claims 1 to 7, wherein the step of placing the construction material comprises extruding the construction material in a pasty form through a nozzle of the deposition head.

9. Method according to any one of claims 1 to 8, wherein after the placement of a first layer of construction material, at least one subsequent layer of construction material is placed onto the first layer, wherein the amount of thickening agent added to the construction material is selected so as to increase the yield stress so that the first layer does not collapse under the load of said at least one subsequent layer.

10. Method according to any one of claims 1 to 9, wherein the yield stress of the freshly placed construction material is 500 - 2000 Pa, preferably 400 - 1000 Pa, measured 30-60 sec. after its placement.

11. Method according to any one of claims 1 to 10, wherein the construction material is concrete, a cement mortar, or a cement micro-mortar.

12. Method according to any one of claims 1 to 11, wherein the thickening agent is amorphous silica and/or fumed aluminum oxide and is added to the construction material in an amount of 8-18 g/l, preferably 10-12 g/l, defined as weight of the solid content of the thickening agent per volume of the construction material.

13. Method according to any one of claims 1 to 11, wherein the thickening agent is a phyllosilicate clay and is added to the construction material in an amount of 2-5 g/l, defined as weight of the solid content of the thickening agent per volume of the construction material.

14. Method according to any one of claims 1 to 13, wherein the hydraulic cement comprises at least 30 wt.-% Portland clinker.

15. Method according to any one of claims 1 to 14, wherein the hydraulic cement comprises at least 10 wt.-% of a supplementary cementing material, preferably selected from ground granulated blast-furnace slag and concrete demolition waste.

16. Method according to any one of claims 1 to 15, wherein a water reducer, in particular a plasticizer or a super-plasticizer, preferably a plasticizer based on polyoxy polycarboxylate or phosphonates, is added to the construction material before the conveying step, wherein the conveying of the construction material is performed by pumping.

17. A kit of components for building structural components layer-by-layer, such as for 3D concrete printing, in particular for performing a method according to any one of claims 1 to 16, comprising:
- a flowable construction material comprising a hydraulic cement,
- a thickening agent for increasing the yield stress of the flowable construction material before setting occurs, the thickening agent being in the form of a colloidal dispersion of mineral particles dispersed in a liquid, the colloidal dispersion preferably having a pH value of ≥ 7.
